# EUROPEAN PATENT SPECIFICATION

(11) **EP 4 215 048 B1**
(45) Date of publication and mention of the grant of the patent: **23.07.2025**
(21) Application number: 23152811.8
(22) Date of filing: 23.01.2023
(51) Int. Cl.: F24B 5/08, F24B 5/02, F23L 9/00, F23B 10/00, A21B 1/04

(54) **BAKING OVEN**
BACKOFEN
FOUR DE CUISSON

(30) Priority: 25.01.2022 FI 20225059
(43) Date of publication of application: 26.07.2023
(73) Proprietor: NunnaUuni Oy, 83940 Nunnanlahti (FI)
(72) Inventor: UUSITALO, Johannes, 83940 Nunnanlahti (FI); MÄKKELI, Hannu, 83940 Nunnanlahti (FI)
(74) Representative: Papula Oy

(56) References cited:
- EP-A1- 0 806 142
- EP-A2- 1 008 808
- WO-A1-2011/004072
- WO-A1-92/08080
- AT-B- 411 620
- DE-U1- 8 712 826
- US-A- 4 850 332

## Description

### TECHNICAL FIELD

The invention relates to a baking oven.

### BACKGROUND

Baking ovens in which material, most often wood, is burnt for heating the baking oven are known in the art. The baking oven is typically used for baking, for cooking and for heating a space. A typical baking oven comprises a combustion chamber, i.e., a so-called firebox, into which the material to be burnt is placed for burning it. During burning, the wood gasifies and the gases burn by means of combustion air, particularly oxygen. Combustion air must therefore be provided into the combustion chambers of baking ovens to ensure sufficient delivery of oxygen. The most typical solution is to provide the door of the combustion chamber with openings which may be opened for the time of burning. Through these openings, combustion air is conveyed into the combustion chamber from a room. Additionally or alternatively, the floor of the combustion chamber may comprise a grate, through which combustion air is fed into the combustion chamber, i.e., combustion air is conveyed into the combustion chamber from below it. The combustion chamber with a grate is not, however, the most typical solution in baking ovens in which the floor of the combustion chamber is to be as evenly heated as possible.

In the fireboxes of traditional baking ovens, the combustion is often incomplete. In incomplete combustion of wood, in turn, emissions that contain carbon monoxide as well as other harmful substances are produced. These kinds of combustion gases are detrimental to health, so more attention is continuously being paid to such emissions to reduce them.

Documents DE 8712826 U1, US 4850332 A, EP 1008808 A2, AT 411620 B, EP 0806142 A1, WO 92/08080 A1 and WO 2011/004072 A1 show examples of fireplaces for burning material such as wood.

### OBJECT OF THE INVENTION

It is an object of the invention to provide a baking oven in which the combustion process is cleaner, whereby the combustion gases contain a lesser amount of harmful emissions.

### SUMMARY OF THE INVENTION

The baking oven according to the invention is characterized by what is stated in claim 1.

According to the invention a baking oven, comprising a horizontal combustion chamber for burning wood or other material in the baking oven, a coal combustion space arranged below the combustion chamber, wherein the combustion chamber comprises a door on the front side of the baking oven for adding wood or other combustible material into the combustion chamber, a floor, side walls on the sides of the combustion chamber, and a back wall on the side of the combustion chamber opposite to the door; the combustion chamber comprises secondary air openings arranged such that both side walls of the combustion chamber and the back wall comprise at least one secondary air opening for feeding secondary air into the combustion chamber. The baking oven comprises secondary air channels connecting the coal combustion space to the secondary air openings for conveying secondary air from the coal combustion space into the combustion chamber.

By means of the solution it is possible to feed secondary air to the combustion process from different directions, which enables a nearly complete and emission-free combustion process.

In one embodiment the secondary air openings of the side walls are arranged at the midpoint between the door and the back wall.

In one embodiment each side wall and/or the back wall comprises several secondary air openings.

In one embodiment the floor of the combustion chamber is solid.

In one embodiment the baking oven comprises first control means for controlling the feed of secondary air into the combustion chamber.

In one embodiment between the door and the floor of the combustion chamber there is an air opening which is open to the coal combustion space for feeding primary air from the coal combustion space into the combustion chamber.

In one embodiment the air opening between the door and the floor of the combustion chamber comprises second control means for controlling the feed of primary air into the combustion chamber.

In one embodiment the location of the secondary air openings from which the secondary air is fed into the combustion chamber is 1/3 - 2/3 of the height of the combustion chamber.

In one embodiment the baking oven comprises the secondary air channels are made of the same material as the main material of the oven.

In one embodiment the combustion air, such as primary air and/or secondary air, is arranged to travel into the coal combustion space via a separate combustion air channel enabling burning closed off from the room space.

In one embodiment each secondary air opening comprises a nozzle for directing secondary air to an upper part of the combustion chamber.

In one embodiment the nozzle comprises a metal plate arranged at the same level with the wall of the respective secondary air opening, such that a gap is provided between the metal plate and the edge of the secondary air opening for feeding secondary air into the combustion chamber.

In one embodiment the end of the secondary air channels leading to the combustion chamber is bevelled towards the upper part of the combustion chamber.

In one embodiment primary air into the combustion chamber is arranged to travel via an opening in the door and/or the air opening between the door and the floor of the combustion chamber.

### LIST OF THE FIGURES

In the following, the invention will be described in detail by means of examples of embodiments with reference to the accompanying drawing, in which
Fig. 1 shows a cross-section of a device according to the invention as a front view,
Fig. 2 shows a cross-section of a device according to the invention as a side view, and
Fig. 3 shows a three-dimensional cross-section of a baking oven.

### DETAILED DESCRIPTION OF THE INVENTION

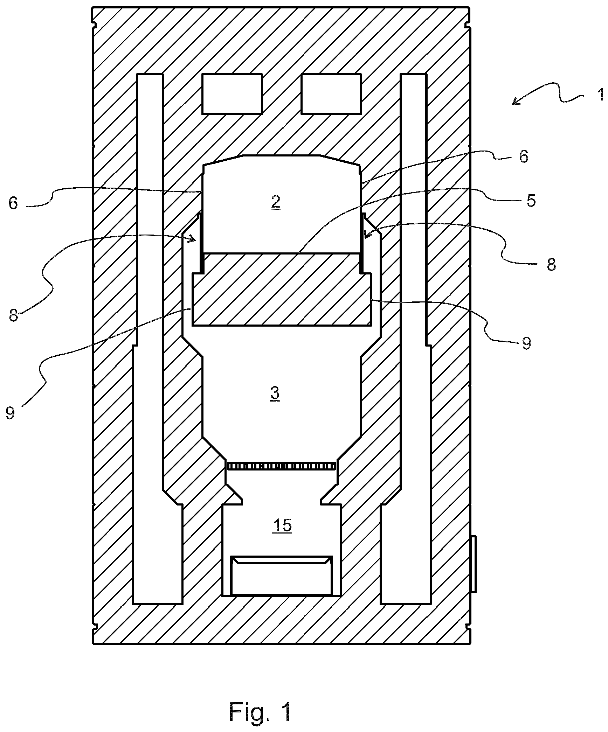

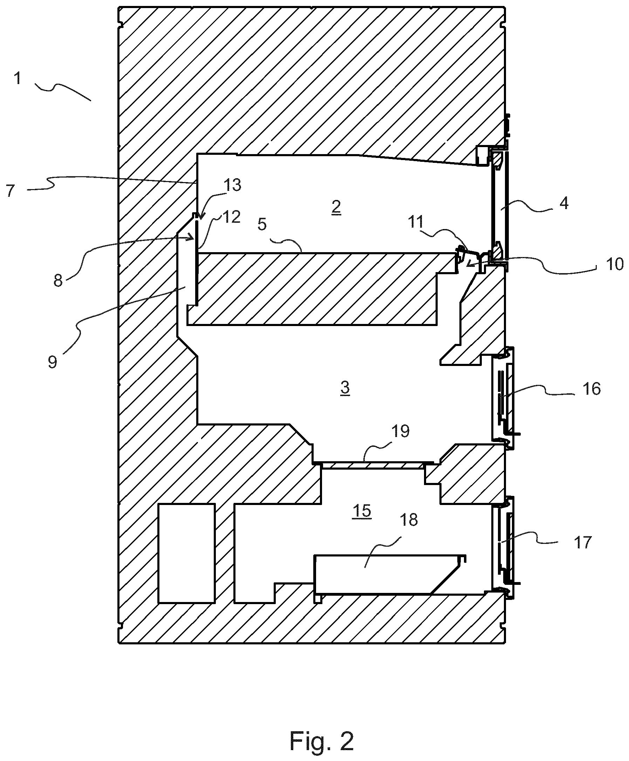

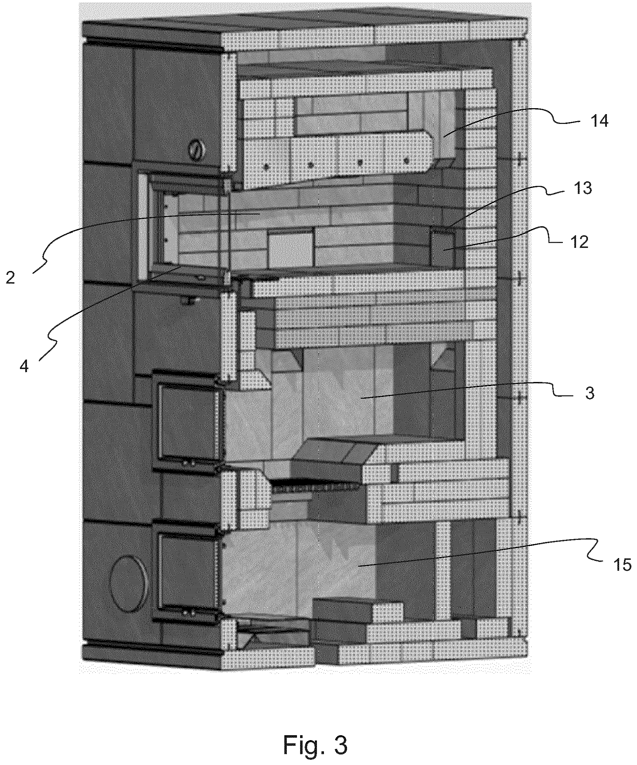

Fig. 1 shows a cross-section of a baking oven according to the invention as seen from the front. Fig. 2 shows a cross-section of the baking oven as seen from the side. Fig. 3 shows a three-dimensional cross-section of the baking oven. Some of the features are illustrated in only one figure, but they may also be present in different embodiments.

The baking oven 1 comprises a horizontal combustion chamber 2 for burning wood or other material in the baking oven. On the front side of the baking oven there is a door 4, from which the combustible material, such as wood or other material, may be added into the combustion chamber 2. The combustion chamber 2 comprises a floor 5, over which the combustible material is placed for burning. The combustion chamber 2 also has side walls 6 on the sides of the combustion chamber, and a back wall 7 in the back part of the combustion chamber, i.e., on the side of the combustion chamber opposite to the door. Further, the combustion chamber has a ceiling in the upper part of the combustion chamber, i.e. on the side opposite to the floor. Below the combustion chamber 2 there is a coal combustion space 3 into which the coals may be dropped from the combustion chamber. The combustion chamber 2 comprises secondary air openings 8 arranged such that both side walls 6 of the combustion chamber and the back wall 7 comprise at least one secondary air opening 8 for feeding secondary air into the combustion chamber 2. Via the secondary air openings 8, secondary air may be fed into the combustion chamber 2 from different directions, i.e., from the sides and from the back, whereby the combustion of gases in the combustion chamber may be improved and the emissions produced may be reduced. The baking oven 1 may further comprise an ash chamber 15 which is below the coal combustion space. When the coal has turned into ash, it may be dropped from the coal combustion space into the ash chamber 15.

The baking oven 1 comprises secondary air channels 9 via which the secondary air is fed into the combustion chamber. The secondary air channels 9 are arranged in such a way that they connect the coal combustion space 3 to the secondary air openings 8, whereby the secondary air is conveyed from the coal combustion space 3 into the combustion chamber 2. For each secondary air opening 8 there may be one secondary air channel 9 or one secondary air channel 9 may be connected to several secondary air openings 8 in the combustion chamber 2. The secondary air channels 9 may extend within the walls of the baking oven 1, such that they so to speak skirt the floor 5 of the combustion chamber, which is between the combustion chamber 2 and the coal combustion space 3. Thus, the floor 5 may be solid, whereby the temperature of the floor is as even as possible all over. The end of the secondary air channels 9 on the side of the secondary air openings 8 may be bevelled, such that the bevelled end directs secondary air towards the upper part or ceiling of the combustion chamber 2. The secondary air channels 9 may be made of the same material as the main material of the baking oven or they may be produced from other heat resisting material, such as metal. The secondary air channels 9 may also be part of the wall of the baking oven 1, whereby they are not separate channel components, but channels provided in the structure of the wall. Preferably, the baking oven is made of soapstone.

The secondary air openings 8 may be arranged such that they are located at the midpoint of the side walls 6 and the back wall 7. I.e., the secondary air openings 8 of the side walls 6 are at the midpoint in the direction of the length of the combustion chamber 2 and the secondary air opening 8 of the back wall 7 is at the midpoint in the direction of the width of the combustion chamber 2. Each side wall 6 and/or the back wall 7 may also comprise several secondary air openings 8. In this case, they may be located symmetrically with respect to the midpoint of the direction of length/width. Alternatively, they may also be asymmetrically with respect to the midpoint. The secondary air openings 8 may be located on the side and the back wall such that they are arranged in the direction of height at between 1/3 - 2/3 of the height of the combustion chamber. Thereby the secondary air to be fed may be fed from a preferred level into the combustion chamber, i.e., not too low close to the floor and not too high close to the ceiling.

The secondary air openings 8 may also comprise nozzles, by means of which the direction of the feed of secondary air into the combustion chamber 2 may be controlled. By means of the nozzles the feed of secondary air may be directed from the secondary air opening 8 towards the ceiling of the combustion chamber. The nozzle may comprise a plate 12 arranged at the same level with the wall of the respective secondary air opening 8, such that a gap 13 is provided between the plate 12 and the secondary air opening for feeding secondary air into the combustion chamber. The plate may be for example of metal or other fire resisting material such as vermiculite or chamotte.

Each or part of the secondary air openings 8 may comprise first control means for controlling the feed of secondary air into the combustion chamber. By means of the first control means the amount of secondary air to be fed into the combustion chamber may be controlled steplessly or in steps. By means of the first control means a secondary air opening or secondary air openings may also be closed, whereby no secondary air is fed from the secondary air opening in question into the combustion chamber. The first control means may be located in connection with the secondary air openings 8, in the secondary air channels 9 or in the coal combustion space 3 in connection with the openings of the secondary air channels. The first control means may comprise for example a plate, the location or position of which may be controlled. The first control means may comprise operating switches extending to the exterior of the baking oven, whereby the first control means may also be used during the combustion process. The operating switch may comprise for example a bar or the like, which extends from the exterior of the baking oven to the first control means for changing its location or for turning it. Alternatively, the first control means may be electrically operated. Thus, the first control means may be controlled manually by the operating switches from the exterior of the baking oven or the first control means may be automatically controllable.

Between the door 4 of the baking oven and the floor 5 of the combustion chamber there may be an air opening 10, which is open to the coal combustion space 3 for feeding primary air from the coal combustion space 3 into the combustion chamber 2. The air opening 10 may be a slot extending in the direction of the width of the combustion chamber. The air opening 10 may comprise second control means 11 for controlling the feed of primary air to be fed via the air opening 10 into the combustion chamber 2. By means of the second control means 11 the amount of primary air and/or the direction of the feed of primary air into the combustion chamber 2 may be controlled. The control may be performed steplessly or in steps. The second control means may comprise a plate, the location or position of which may be changed. The plate may be sliding, whereby the amount of primary air to be fed may be controlled by sliding the plate to different locations. Alternatively the plate is turnable, whereby its angle with respect to the floor of the fire chamber may be controlled. The angle may be controlled in such a way that the edge of the plate on the side of the combustion chamber is lifted upwards, whereby the primary air to be fed may be directed more towards the ceiling of the combustion chamber. Thus, primary air may be directed to different points of the combustion process depending on the current stage of the combustion process, i.e., lighting, burning etc. Thus, the best combustion efficiency can be maintained in different stages of combustion. By means of the second control means 11 the air opening 10 may also be entirely closed, whereby no combustion air is fed into the combustion chamber 2 via the air opening 10. The air opening 10 between the door 4 and the floor 5 of the combustion chamber may also be used as a coal dropping opening into the coal combustion space 3. Alternatively, the second control means may be electrically operated. Thus, the second control means may be controlled manually by operating switches from the exterior of the baking oven or the second control means may be automatically controllable.

The second control means 11 may also be used for controlling the feeding of combustion air such that by controlling it the relationship between primary air to be fed via the air opening 10 and secondary air to be fed via the secondary air openings 8 may be controlled. I.e., by adjusting the air opening 10 smaller, the proportion of combustion air to be fed via the secondary air openings 8 increases. When the size of the air opening 10 is increased, the proportion of combustion air to be fed via the secondary air openings 8 decreases. In case the baking oven also comprises the first control means by means of which the amount of secondary air is controlled, they may be used together with the second control means for controlling the feed of combustion air into the combustion space.

The baking oven may comprise measuring sensors, by means of which the contents and/or temperature of combustion gas may be measured. The measuring sensors may be connected to a control unit, by means of which the first and/or the second control means may be controlled, i.e., their position or location changed, automatically for controlling the feed of primary air and/or secondary air into the combustion chamber.

The door 4 of the baking oven may also comprise an openable opening or openings. Through the openings in the door 4, primary air may be conveyed into the combustion chamber from the room into which the baking oven is installed. In case the baking oven further comprises the air opening 10 between the floor 5 of the combustion chamber and the door 4, primary air may be conveyed into the combustion chamber via the openings of the door and/or the air opening. The proportion of the amount of primary air to be fed via the openings of the door and the air opening may also be controlled by adjusting the size of the openings of the door and/or by means of the second control means described above.

The baking oven may also be isolated from the room air, which enables burning closed off from the room space.

In this case the combustion air is conveyed into the baking oven via a separate channel, which channel is connected to a separate space or to outside, from where the combustion air is conveyed into the baking oven. The separate channel may be connected to the coal combustion space 3, from where the combustion air is conveyed as described above into the combustion chamber 2. The separate channel may also be connected to the ash chamber 15, from where the combustion air is conveyed further into the coal combustion chamber 3 and from there into the combustion chamber 2. The separate channel may be located for example at the bottom of the baking oven.

The baking oven 1 may comprise a combustion gas outlet channel or channels 14, by means of which the combustion gases may be conveyed away from the combustion chamber 2. The outlet channel 14 is connected to an outlet opening or outlet openings in the combustion chamber, which is or are located in the back part of the combustion chamber, for example in the ceiling of the combustion chamber. The outlet opening may be located in the direction of the width of the baking oven at the same point as the secondary air opening of the back wall. Alternatively, the outlet opening or outlet openings may be located in the direction of the width of the baking oven at a different point than the secondary air opening of the back wall. By positioning the outlet opening and the secondary air opening at different points, the combustion airs/gases can be caused to mix more beneficially in the combustion chamber.

The coal combustion space 3 may comprise a separate door 16, via which coals may be handled in the coal combustion space 3, for example to drop the ashes therein into the ash chamber 15. The floor of the coal combustion space 3 may comprise openings or a grate 19, through which the ash may be dropped into the ash chamber 15. The ash chamber 15 may comprise a removable ash container 18, into which the ash may be collected and the ash container may be taken via a door 17 of the ash chamber out from the baking oven for emptying.

## Claims

1. A baking oven (1), comprising a horizontal combustion chamber (2) for burning wood or other material in the baking oven, a coal combustion space (3) arranged below the combustion chamber, wherein
- the combustion chamber (2) comprises a door (4) on the front side of the baking oven for adding wood or other combustible material into the combustion chamber, a floor (5), side walls (6) on the sides of the combustion chamber, and a back wall (7) on the side of the combustion chamber opposite to the door,
**characterized in that** the combustion chamber (2) comprises secondary air openings (8) arranged such that both side walls (6) of the combustion chamber and the back wall comprise at least one secondary air opening for feeding secondary air into the combustion chamber (2), and
the baking oven comprises secondary air channels (9) connecting the coal combustion space (3) to the secondary air openings for conveying secondary air from the coal combustion space (3) into the combustion chamber.

2. The baking oven according to claim 1, wherein the secondary air openings (8) of the side walls (6) are arranged at the midpoint between the door (4) and the back wall (7).

3. The baking oven according to any one of claims 1-2, wherein each side wall (6) and/or the back wall (7) comprises several secondary air openings (8).

4. The baking oven according to any one of claims 1-3, wherein the floor (5) of the combustion chamber is solid.

5. The baking oven according to any one of claims 1-4, wherein the baking oven comprises first control means for controlling the feed of secondary air into the combustion chamber (2).

6. The baking oven according to any one of claims 1-5, wherein between the door (4) and the floor (5) of the combustion chamber there is an air opening (10) which is open to the coal combustion space for feeding primary air from the coal combustion space (3) into the combustion chamber (2).

7. The baking oven according to claim 6, wherein the air opening (10) between the door (4) and the floor (5) of the combustion chamber comprises second control means (11) for controlling the feed of primary air into the combustion chamber (2).

8. The baking oven according to any one of claims 1-7, wherein the location of the secondary air openings (8) from which the secondary air is fed into the combustion chamber is 1/3 - 2/3 of the height of the combustion chamber.

9. The baking oven according to any one of claims 1-8, wherein the secondary air channels (9) are made of the same material as the main material of the oven.

10. The baking oven according to any one of claims 1-9, wherein the combustion air, such as primary air and/or secondary air, is arranged to travel into the coal combustion space (3) via a separate combustion air channel enabling burning closed off from a room space.

11. The baking oven according to any one of claims 1-10, wherein each secondary air opening (8) comprises a nozzle (12) for directing secondary air to an upper part of the combustion chamber (2).

12. The baking oven according to claim 11, wherein the nozzle comprises a plate (12) arranged at the same level with the wall of the respective secondary air opening (8), such that a gap (13) is provided between the plate (12) and the edge of the secondary air opening for feeding secondary air into the combustion chamber.

13. The baking oven according to any one of claims 1-12, wherein the end of the secondary air channels (9) leading to the combustion chamber (2) is bevelled towards the upper part of the combustion chamber (2).

14. The baking oven according to any one of claims 1-13, wherein primary air into the combustion chamber (2) is arranged to travel via an opening in the door (4) and/or the air opening (10) between the door and the floor (5) of the combustion chamber.

## Patentansprüche

1. Backofen (1) mit einer horizontalen Brennkammer (2) zum Verbrennen von Holz oder anderem Material im Backofen, einem unterhalb der Brennkammer angeordneten Kohleverbrennungsraum (3), wobei
- die Brennkammer (2) eine Tür (4) an der Vorderseite des Backofens zum Einlegen von Holz oder anderem brennbaren Material in die Brennkammer, einen Boden (5), Seitenwände (6) an den Seiten der Brennkammer, und eine Rückwand (7) an der der Tür gegenüberliegenden Seite der Brennkammer umfasst,
**dadurch gekennzeichnet, dass** die Brennkammer (2) Sekundärluftöffnungen (8) aufweist, die so angeordnet sind, dass sowohl die beiden Seitenwände (6) der Brennkammer als auch die Rückwand mindestens eine Sekundärluftöffnung zum Einleiten von Sekundärluft in die Brennkammer (2) umfassen, und
der Backofen Sekundärluftkanäle (9) umfasst, die den Kohleverbrennungsraum (3) mit den Sekundärluftöffnungen verbinden, um Sekundärluft aus dem Kohleverbrennungsraum (3) in die Brennkammer zu leiten.

2. Backofen nach Anspruch 1, wobei die Sekundärluftöffnungen (8) der Seitenwände (6) in der Mitte zwischen der Tür (4) und der Rückwand (7) angeordnet sind.

3. Backofen nach einem der Ansprüche 1 bis 2, wobei jede Seitenwand (6) und/oder die Rückwand (7) mehrere Sekundärluftöffnungen (8) umfasst.

4. Backofen nach einem der Ansprüche 1 bis 3, wobei der Boden (5) der Brennkammer massiv ist.

5. Backofen nach einem der Ansprüche 1 bis 4, wobei der Backofen erste Steuermittel zum Steuern der Zufuhr von Sekundärluft in die Brennkammer (2) umfasst.

6. Backofen nach einem der Ansprüche 1 bis 5, wobei zwischen der Tür (4) und dem Boden (5) der Brennkammer eine Luftöffnung (10) vorgesehen ist, die zum Kohleverbrennungsraum hin offen ist, um Primärluft aus dem Kohleverbrennungsraum (3) in die Brennkammer (2) einzuführen.

7. Backofen nach Anspruch 6, wobei die Luftöffnung (10) zwischen der Tür (4) und dem Boden (5) der Brennkammer zweite Steuermittel (11) zum Steuern der Zufuhr von Primärluft in die Brennkammer (2) umfasst.

8. Backofen nach einem der Ansprüche 1 bis 7, wobei die Sekundärluftöffnungen (8), aus denen die Sekundärluft in die Brennkammer eingeleitet wird, sich in 1/3 bis 2/3 der Höhe der Brennkammer befinden.

9. Backofen nach einem der Ansprüche 1 bis 8, wobei die Sekundärluftkanäle (9) aus dem gleichen Material wie das Hauptmaterial des Ofens bestehen.

10. Backofen nach einem der Ansprüche 1 bis 9, wobei die Verbrennungsluft, wie Primärluft und/oder Sekundärluft, eingerichtet ist, über einen separaten Verbrennungsluftkanal, in den Kohleverbrennungsraum (3) zu strömen, so dass, eine von einem Raumbereich abgeschlossene Verbrennung ermöglicht wird.

11. Backofen nach einem der Ansprüche 1 bis 10, wobei jede Sekundärluftöffnung (8) eine Düse (12) zum Leiten von Sekundärluft zu einem oberen Teil der Brennkammer (2) umfasst.

12. Backofen nach Anspruch 11, wobei die Düse eine Platte (12) umfasst, die auf gleicher Höhe mit der Wand der jeweiligen Sekundärluftöffnung (8) angeordnet ist, so dass zwischen der Platte (12) und dem Rand der Sekundärluftöffnung ein Spalt (13) zum Einleiten von Sekundärluft in die Brennkammer vorgesehen ist.

13. Backofen nach einem der Ansprüche 1 bis 12, wobei das Ende der zur Brennkammer (2) führenden Sekundärluftkanäle (9) zum oberen Teil der Brennkammer (2) hin abgeschrägt ist.

14. Backofen nach einem der Ansprüche 1 bis 13, wobei Primärluft in die Brennkammer (2) eingerichtet ist, durch eine Öffnung in der Tür (4) und/oder die Luftöffnung (10) zwischen der Tür und dem Boden (5) der Brennkammer zu strömen.

## Revendications

1. Four de cuisson (1), comprenant une chambre de combustion horizontale (2) pour brûler du bois ou un autre matériau dans le four de cuisson, un espace de combustion de charbon (3) étant agencé au-dessous de la chambre de combustion, dans lequel
- la chambre de combustion (2) comprend une porte (4) sur le côté avant du four de cuisson pour ajouter du bois ou un autre matériau combustible dans la chambre de combustion, une sole (5), des parois latérales (6) sur les côtés de la chambre de combustion, et une paroi arrière (7) sur le côté de la chambre de combustion à l'opposé de la porte,
**caractérisée en ce que** la chambre de combustion (2) comprend des ouvertures d'air secondaire (8) agencées de sorte que les deux parois latérales (6) de la chambre de combustion et la paroi arrière comprennent au moins une ouverture d'air secondaire pour alimenter la chambre de combustion (2) en air secondaire, et
le four de cuisson comprend des canaux d'air secondaire (9) raccordant l'espace de combustion de charbon (3) aux ouvertures d'air secondaire pour acheminer l'air secondaire de l'espace de combustion de charbon (3) dans la chambre de combustion.

2. Four de cuisson selon la revendication 1, dans lequel les ouvertures d'air secondaire (8) des parois latérales (6) sont agencées au niveau du point médian entre la porte (4) et la paroi arrière (7).

3. Four de cuisson selon l'une quelconque des revendications 1-2, dans lequel chaque paroi latérale (6) et/ou la paroi arrière (7) comprennent plusieurs ouvertures d'air secondaire (8).

4. Four de cuisson selon l'une quelconque des revendications 1-3, dans lequel la sole (5) de la chambre de combustion est pleine.

5. Four de cuisson selon l'une quelconque des revendications 1-4, dans lequel le four de cuisson comprend un premier moyen de commande pour commander l'alimentation de la chambre de combustion (2) en air secondaire.

6. Four de cuisson selon l'une quelconque des revendications 1-5, dans lequel, entre la porte (4) et la sole (5) de la chambre de combustion, il existe une ouverture d'air (10) qui est ouverte vers l'espace de combustion de charbon pour alimenter la chambre de combustion (2) en air primaire provenant de l'espace de combustion de charbon (3).

7. Four de cuisson selon la revendication 6, dans lequel l'ouverture d'air (10) entre la porte (4) et la sole (5) de la chambre de combustion comprend un second moyen de commande (11) pour commander l'alimentation de la chambre de combustion (2) en air primaire.

8. Four de cuisson selon l'une quelconque des revendications 1-7, dans lequel l'emplacement des ouvertures d'air secondaire (8) à partir desquelles la chambre de combustion est alimentée en air secondaire est 1/3 - 2/3 de la hauteur de la chambre de combustion.

9. Four de cuisson selon l'une quelconque des revendications 1-8, dans lequel les canaux d'air secondaire (9) sont fabriqués dans le même matériau que le matériau principal du four.

10. Four de cuisson selon l'une quelconque des revendications 1-9, dans lequel l'air de combustion, tel que l'air primaire et/ou l'air secondaire, est agencé pour se déplacer dans l'espace de combustion de charbon (3) par l'intermédiaire d'un canal d'air de combustion séparé permettant une combustion isolée d'un espace de pièce.

11. Four de cuisson selon l'une quelconque des revendications 1-10, dans lequel chaque ouverture d'air secondaire (8) comprend une buse (12) pour diriger l'air secondaire vers une partie supérieure de la chambre de combustion (2).

12. Four de cuisson selon la revendication 11, dans lequel la buse comprend une plaque (12) agencée au même niveau avec la paroi de l'ouverture d'air secondaire (8) respective, de sorte qu'un interstice (13) soit prévu entre la plaque (12) et le bord de l'ouverture d'air secondaire pour alimenter la chambre de combustion en air secondaire.

13. Four de cuisson selon l'une quelconque des revendications 1-12, dans lequel l'extrémité des canaux d'air secondaire (9) conduisant à la chambre de combustion (2) est biseautée vers la partie supérieure de la chambre de combustion (2).

14. Four de cuisson selon l'une quelconque des revendications 1-13, dans lequel l'air primaire entrant dans la chambre de combustion (2) est agencé pour se déplacer par l'intermédiaire d'une ouverture dans la porte (4) et/ou de l'ouverture d'air (10) entre la porte et la sole (5) de la chambre de combustion.
